# EUROPÄISCHE PATENTANMELDUNG

(11) **EP 3 388 670 A1**
(43) Veröffentlichungstag der Anmeldung: **17.10.2018**
(21) Anmeldenummer: 18175752.7
(22) Anmeldetag: 05.07.2016
(51) Int. Cl.: F04B 43/12, B60P 3/16

(54) **ROTORSCHLAUCHPUMPE**

(62) Teilanmeldung aus: 16177915.2
(71) Anmelder: Putzmeister Engineering GmbH, 72631 Aichtal (DE)
(72) Erfinder: BRIEM, Michael, 73760 Ostfildern (DE); CLAUDON, Florent, 70199 Stuttgart (DE); SCHOLLER, Christian, 70178 Stuttgart (DE); SCHÖNKNECHT, Christian, 70736 Fellbach (DE); WEIMER, Ralf, 70597 Stuttgart (DE)
(74) Vertreter: Gauss, Nikolai

(57) **Zusammenfassung**

Die Erfindung betrifft eine Rotorschlauchpumpe (620) mit einem in einem Schlauchbett angeordneten Pumpschlauch, der für das Pumpen von Fördermedium von einem ersten Anschluss zu einem zweiten Anschluss mit wenigstens einer an einem um eine Rotorachse (74) drehbaren Rotor (72) aufgenommenen Einrichtung (76) zum Quetschen des Pumpschlauchs (50) an einer bei Drehen des Rotors (72) an dem Pumpschlauch verlagerten Quetschstelle gegen das Schlauchbett (52) zusammengedrückt werden kann. Erfindungsgemäß enthält die Einrichtung (76) zum Quetschen des Pumpschlauchs wenigstens einen an dem Rotor (72) beweglich verlagerbar angeordneten Rollenträger (114) mit wenigstens einer an dem Rollenträger (114) beweglich gelagerten Quetschrolle (80, 82, 84), wobei ein an dem Rotor (72) abgestütztes Krafterzeugungsmittel (118, 118') für das Beaufschlagen des Rollenträgers (114) mit einer Kraft FK die bei einer Drehbewegung des Rotors (72) die wenigstens eine an dem Rollenträger (114) drehbar gelagerte Quetschrolle (80, 82, 84) gegen den Pumpschlauch drückt.

## Beschreibung

Die Erfindung betrifft eine Rotorschlauchpumpe mit einem in einem Schlauchbett angeordneten Pumpschlauch, der für das Pumpen von Fördermedium von einem ersten Anschluss zu einem zweiten Anschluss mit wenigstens einer an einem um eine Rotorachse drehbaren Rotor aufgenommenen Einrichtung zum Quetschen des Pumpschlauchs an einer bei Drehen des Rotors an dem Pumpschlauch verlagerten Quetschstelle gegen das Schlauchbett zusammengedrückt werden kann.

Eine derartige Rotorschlauchpumpe ist aus der DE 42 04 330 A1 bekannt. Dort ist ein Fahrmischer beschrieben, der eine Rotorschlauchpumpe für Dickstoffe, wie z. B. Beton, Estrich oder Schlamm enthält. Die Rotorschlauchpumpe hat ein flachzylindrisches Pumpengehäuse mit einem Schlauchbett für einen Pumpschlauch, der in dem Fahrmischer über einen ersten Anschluss in Form eines Saugeingangs an einen Aufgabebehälter angeschlossen ist. Der Pumpschlauch hat einen zweiten Anschluss, der als Druckauslass wirkt und der mit einer Förderleitung verbunden ist. Die Rotorschlauchpumpe enthält einen Rotor, der den Pumpschlauch mittels zweier diametral gegenüberliegender Quetschrollen gegen das Schlauchbett des Pumpengehäuses von innen her andrückt. Die Quetschrollen verschließen so den Pumpschlauch mittels Quetschen. Durch Drehen des Rotors wird dabei das Fördermedium durch den Pumpschlauch bewegt.

Der Pumpschlauch in einer derartigen Rotorschlauchpumpe unterliegt einem Verschleiß und muss deshalb regelmäßig erneuert werden. Viele Fördermedien in Form von Dickstoffen, insbesondere Beton enthalten nämlich abrasive Bestandteile und Steine, die den Pumpschlauch von innen her verschleißen. Durch das Eintauchen der Quetschrollen einer Rotorschlauchpumpe in den Pumpschlauch wird der Pumpschlauch im Pumpbetrieb zusätzlich auch von außen her an der Pumpschlauchoberfläche belastet. In einer Rotorschlauchpumpe entsteht nämlich beim Drehen des Rotors zwischen der Außenumfangsfläche einer Quetschrolle, die in den Pumpschlauch einer Rotorschlauchpumpe eingetaucht ist, und dem Mantel des Pumpschlauchs entlang der Eintauchkontur der Quetschrolle ein Schlupf. Dies liegt daran, dass eine Quetschrolle in einer Rotorschlauchpumpe im Pumpbetrieb mit der Winkelgeschwindigkeit des Rotors um die Rotordrehachse bewegt wird. Trotz der damit verbundenen Drehbewegung einer Quetschrolle um ihre eigene Drehachse variiert dabei die Geschwindigkeit der mit dem Pumpschlauch in Eingriff stehenden Abschnitte der Außenumfangsfläche der Quetschrolle über deren Eintauchkontur in den Pumpschlauch relativ zu der Pumpschlauchoberfläche.

Dieser Schlupf kann zwar verringert werden, indem der Durchmesser der Quetschrollen vergrößert wird. Der Keilwinkel des durch das Eintauchen einer Quetschrolle in den Pumpschlauch an der Eintauchkontur in dem Inneren des Pumpschlauchs ausgebildeten Fördermediumkeils nimmt jedoch mit zunehmendem Durchmesser der Quetschrollen in einer Rotorschlauchpumpe ebenfalls ab.

Wenn aber der Keilwinkel des Fördermediumkeils in dem Pumpschlauch einer Rotorschlauchpumpe zu spitz ist, kann es in dem Pumpschlauch leicht zum Verklemmen von nicht verformbaren, festen Bestandteilen in den Fördermedien kommen, z. B. von Steinen, die in Flüssigbeton regelmäßig enthalten sind. Dies führt dann zu hohen Reibungskräften zwischen dem Fördermedium und der Innenwand des Pumpschlauchs, was großen Verschleiß verursacht und einen Pumpschlauch u. U. erheblich beschädigen kann. Darüber hinaus können sich große Reibungskräfte auch auf den Wirkungsgrad der Rotorschlauchpumpe negativ auswirken und stellen eine erhebliche Belastung der Bauteile dar.

In der DE 2 217 787 A1 ist eine Peristaltik-Schlauchpumpe für den Einsatz in extrakorporalen Blutkreisläufen beschrieben. Die Peristaltik-Schlauchpumpe hat einen Rotor, der einen ersten und zweiten Rollenträgerträger mit Druckrollen trägt, die bei Bewegen des Rotors um eine Rotorachse eines einstellbaren pneumatischen Drucks gegen den Pumpschlauch der Peristaltik-Schlauchpumpe gedrückt werden, was eine Verletzung der Erytrozytenmembranen des in den Blutkreisläufen bewegten Bluts unterbindet.

Die DE 42 95 020 C2 offenbart eine Peristaltik-Schlauchmpumpe für das Pumpen von Blut, in der ein Pumpschlauch mittels einer vorauseilenden, um eine Rotorachse bewegte und an einem Rollenträger angeordnete Quetschrolle und eine weitere, ebenfalls an dem Rollenträger drehbar gelagerte Quetschrolle lediglich teilweise zusammengedrückt wird, um die Blutzellen in dem gepumpten Blut nicht zu beschädigen.

Aus der EP 2 113 668 A1 ist eine Peristaltik-Schlauchpumpe mit einem Rotor bekannt, der für das Quetschen des Pumpschlauchs mehrere Quetschrollen aufweist, die jeweils an einem an dem Rotor beweglich gelagerten Rollenträger aufgenommen sind.

Aufgabe der Erfindung ist es, eine Rotorschlauchpumpe mit einem in einem Schlauchbett angeordneten Pumpschlauch bereitzustellen, die eine große Standzeit hat.

Diese Aufgabe wird durch die in Anspruch 1 angegebene Rotorschlauchpumpe gelöst. Vorteilhafte Ausführungsformen der Erfindung sind in den abhängigen Ansprüchen angegeben.

Die Rotorschlauchpumpe kann wenigstens eine Einrichtung zum Quetschen des Pumpschlauchs enthalten, die eine Rollengruppe mit mehreren Quetschrollen aufweist, die den Pumpschlauch an der wenigstens einen Quetschstelle gemeinsam quetschen.

Mit dieser Maßnahme lässt sich in einer Rotorschlauchpumpe der Schlupf zwischen den Quetschrollen und dem Pumpschlauch verringern, so dass an dem Pumpschlauch angreifende Reibungskräfte und die thermische Belastung des Pumpschlauchs abnehmen.

Die Quetschrollen einer Rollengruppe können eine Multirolle bilden, die dem Fördermediumkeil in dem Pumpschlauch der Rotorschlauchpumpe eine gewünschte, gesonderte Form geben. Die Quetschrollen einer solchen Rollengruppe können dabei zumindest teilweise einen unterschiedlichen Durchmesser haben. Insbesondere können die Quetschrollen einer solchen Rollengruppe Drehachsen haben, deren gegenseitiger Abstand jeweils kleiner ist als der Abstand der Drehachsen der Quetschrollen von der Rotorachse. Eine Rollengruppe kann auch eine Quetschrolle oder mehrere Quetschrollen aufweisen, deren Rollendurchmesser kleiner ist als der Durchmesser des Pumpschlauchs.

Von Vorteil ist es, wenn die Rollengruppe eine erste Quetschrolle und wenigstens eine weitere der ersten Quetschrollen benachbarte Quetschrolle hat, wobei die erste Quetschrolle der wenigstens einer weiteren Quetschrolle an dem Pumpschlauch beim Drehen des Rotors verweilt, und wobei die erste Quetschrolle einen kleineren Rollendurchmesser hat als die wenigstens eine weitere Quetschrolle.

Die Quetschrollen einer Rollengruppe können Rollenumfangsflächen für das Quetschen des Pumpschlauchs haben, die an einer in einer zu der Rotorachse senkrechten Drehebene liegenden Kreislinie auf der zu dem Kreislinienzentrum weisenden Seite tangential anliegen.

Die Rotorschlauchpumpe enthält einen in einem Schlauchbett angeordneten Pumpschlauch, der für das Pumpen von Fördermedium von einem ersten Anschluss zu einem zweiten Anschluss mit einer an einem um eine Rotorachse drehbaren Rotor aufgenommenen Einrichtung zum Quetschen des Pumpschlauchs an wenigstens einer bei Drehen des Rotors entlang an dem Pumpschlauch in die Drehrichtung verlagerten Quetschstelle gegen das Schlauchbett zusammengedrückt werden kann, wobei die Einrichtung zum Quetschen des Pumpschlauchs wenigstens einen an dem Rotor beweglich verlagerbar angeordneten Rollenträger mit wenigstens einer an dem Rollenträger beweglich gelagerten, insbesondere drehbar gelagerten Quetschrolle enthält. Die Drehachse der wenigstens eine Quetschrolle an dem Rollenträger ist vorzugsweise relativ zu dem Rollenträger ortsfest angeordnet. Alternativ hierzu ist es auch möglich, eine Verlagerbarkeit der Drehachse der wenigstens einen Quetschrolle an dem Rollenträger vorzusehen, so dass die Quetschrolle in Bezug auf den Rollenträger nicht nur eine Drehbewegung sondern z. B. auch eine Pendelbewegung ausführen kann. Von Vorteil ist es insbesondere, wenn der Rollenträger hier unter Veränderung des Abstands der wenigstens einen Quetschrolle von der Rotorachse verlagerbar ist. Der Rollenträger kann hierzu an dem Rotor zwangsgeführt sein. Von Vorteil ist es auch, wenn der Rollenträger mit wenigstens zwei voneinander verschiedenen Bewegungsfreiheitsgraden an dem Rotor verlagerbar ist. Auf diese Weise können die Quetschrollen in der Rotorschlauchpumpe nicht verformbaren Bestandteilen in einem Fördermedium, z. B. größeren Steinen ausweichen. Damit lassen sich an Pumpschlauch und Schlauchbett in der Rotorschlauchpumpe Schäden vermeiden.

Indem ein an dem Rotor abgestütztes Krafterzeugungsmittel für das Beaufschlagen des Rollenträgers mit einer Kraft F_{K} vorgesehen ist, die bei einer Drehbewegung des Rotors die wenigstens eine an dem Rollenträger drehbar gelagerte Quetschrolle gegen den Pumpschlauch drückt, kann eine definierte Anpresskraft für das Anpressen der Quetschrollen an den Pumpschlauch bereitgestellt werden. Von Vorteil ist es, wenn die Kraft F_{K}, die bei einer Drehbewegung des Rotors die wenigstens eine Quetschrolle gegen den Pumpschlauch drückt, einstellbar ist. Auf diese Weise ist es möglich, die Anpresskraft von Quetschrollen an den Pumpschlauch abhängig von der Art und Beschaffenheit und oder der Menge des Fördermediums einzustellen, das mit der Rotorschlauchpumpe gepumpt wird, und/oder die Anpresskraft von Quetschrollen an den Pumpschlauch abgestimmt auf eine gewünschte Fördermenge pro Zeiteinheit einzustellen, ohne dass hierfür ein aktives Synchronisieren der den Rollenträger beaufschlagenden Kraft F_{K} mit der Drehbewegung des Rotors erforderlich ist.

Für das Bereitstellen der den Rollenträger beaufschlagenden Kraft kann das Krafterzeugungsmittel einen elastisch verformbaren Energiespeicher enthalten, z. B. eine Tellerfeder eine Schraubenfeder, eine Blattfeder, eine Schraubentellerfeder oder auch eine Drehstabfeder. Grundsätzlich kann der elastisch verformbare Energiespeicher in dem Krafterzeugungsmittel für das Bereitstellen der den Rollenträger beaufschlagenden Kraft auch als eine Ringfeder gestaltet sein. Der elastisch verformbare Energiespeicher in dem Krafterzeugungsmittel kann auch mehrere gleiche oder unterschiedliche der vorstehend angegebenen Federn enthalten. Bevorzugt umfasst das Krafterzeugungsmittel allerdings ein hydropneumatisches Federsystem mit einem an den Rollenträger angeschlossenen Hydrozylinder und einem mit dem Hydrozylinder verbundenen Hydraulikspeicher, der ein Gas- und/oder Ölvolumen enthält, das mit einem einstellbaren Vorspanndruck beaufschlagt werden kann. Der Hydrozylinder ist dabei mit dem Rollenträger bewegungsgekoppelt und an dem Rotor abgestützt. Ein solches hydropneumatisches Federsystem mit einem Hydrozylinder ermöglicht bei einfacher Bedienung das Einstellen einer Kraft-Weg-Kennlinie für einen Kolben des Hydrozylinders und damit das Einstellen einer Anpresskraft für die Quetschrollen eines Rollenträgers an den Pumpschlauch bei laufendem Pumpbetrieb der Rotorschlauchpumpe. Ein hydropneumatisches Federsystem in einer erfindungsgemäßen Rotorschlauchpumpe kann auch eine an den Hydrozylinder angeschlossene Wegmesseinrichtung aufweisen, um eine oder mehrere Quetschrollen abhängig von einer erfassten Auslenkung des Kolbens des Hydrozylinders mit einer definierten Quetschkraft zu beaufschlagen. Damit kann die Standzeit für den Förderschlauch und das Schlauchbett in der Rotorschlauchpumpe verlängert werden, ohne dass dies die Pumpleistung der Rotorschlauchpumpe verringert.

Eine erfindungsgemäße Rotorschlauchpumpe kann z. B. in einen Fahrmischer integriert werden.

Im Folgenden wird die Erfindung anhand des in den Zeichnungen in schematischer Weise dargestellten Ausführungsbeispiels näher erläutert.

Es zeigen:
- Fig. 1: einen Fahrmischer mit einer ersten Rotorschlauchpumpe;
- Fig. 2: eine perspektivische Ansicht der ersten Rotorschlauchpumpe des Fahrmischers mit einem Pumpschlauch;
- Fig. 3: einen Schnitt der ersten Rotorschlauchpumpe mit dem Pumpschlauch;
- Fig. 4: die Relativbewegung von Quetschrollen und Pumpschlauch in der ersten Rotorschlauchpumpe;
- Fig. 5: einen Teilschnitt einer zweiten Rotorschlauchpumpe mit einem Pumpschlauch;
- Fig. 6: einen Teilschnitt einer dritten Rotorschlauchpumpe mit einem Pumpschlauch;
- Fig. 7: das Quetschen des Pumpschlauchs mittels der Quetschrollen einer ersten Rollengruppe in der dritten Rotorschlauchpumpe;
- Fig. 8: das Quetschen des Pumpschlauchs mittels einer einzelnen Quetschrolle in einer Rotorschlauchpumpe;
- Fig. 9: einen Teilschnitt einer vierten Rotorschlauchpumpe mit einem Pumpschlauch;
- Fig. 10: das Quetschen des Pumpschlauchs mittels der Quetschrollen einer Rollengruppe in der vierten Rotorschlauchpumpe;
- Fig. 11: einen Teilschnitt einer fünften Rotorschlauchpumpe mit einem Pumpschlauch;
- Fig. 12: einen Teilschnitt einer sechsten Rotorschlauchpumpe mit einem Pumpschlauch;
- Fig. 13: das Quetschen des Pumpschlauchs mittels einer Quetschrolle in der sechsten Rotorschlauchpumpe;
- Fig. 14: einen Teilschnitt einer siebten Rotorschlauchpumpe mit einem hydropneumatischen Federsystem und einem Hydrozylinder;
- Fig. 15: das hydropneumatische Federsystem mit dem Hydrozylinder; und
- Fig. 16: einem Teilschnitt einer achten Rotorschlauchpumpe.

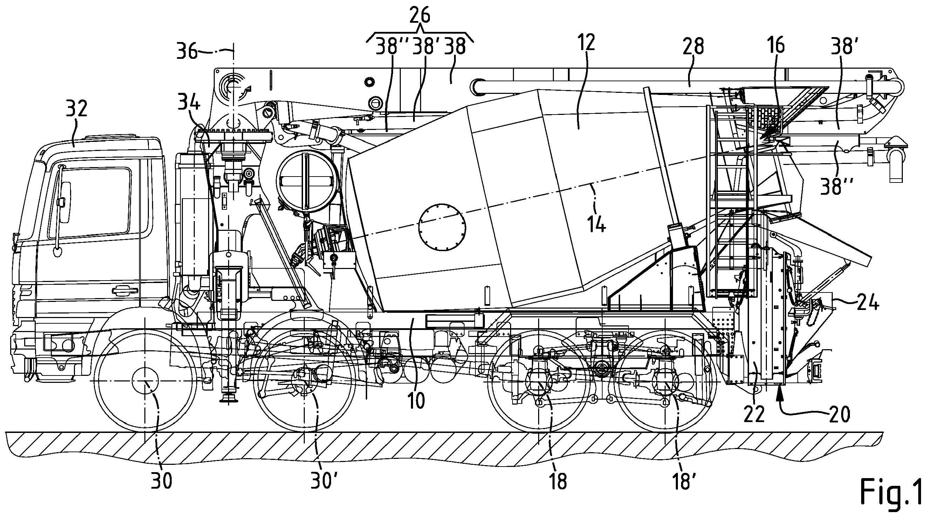

Der in der Fig. 1 gezeigte Fahrmischer für Beton hat ein vierachsiges langgestrecktes Fahrgestell 10 mit einer Mischtrommel 12. Die Mischtrommel 12 ist in einem mittleren Bereich des Fahrgestells 10 angeordnet und kann um die Achse 14 gedreht werden. Die Mischtrommel 12 hat eine Beschickungs- und Auslassöffnung 16, die auf dem Fahrgestell 10 schräg nach hinten oben weist. In der Nähe des rückwärtigen Endes ist hinter den Hinterachsen 18, 18' an dem Fahrgestell 10 eine Rotorschlauchpumpe 20 angeordnet. Die Rotorschlauchpumpe 20 hat ein Pumpengehäuse 22 mit einem Pumpschlauch, der mit einem Materialaufgabebehälter 24 verbunden ist. Der Fahrmischer enthält einen Verteilermast 26 mit einer Förderleitung 28. Der Verteilermast 26 ist in dem Bereich der Vorderachsen 30, 30' in der Nähe des Führerhauses 32 an einem Lagerbock 34 um eine vertikale Achse 36 drehbar gelagert. Der Verteilermast 26 ist aus mehreren gegeneinander verschwenkbaren Auslegerarmen 38, 38', 38" zusammengesetzt. Der Pumpschlauch der Rotorschlauchpumpe 20 ist an die Förderleitung in dem Verteilermast 26 angeschlossen.

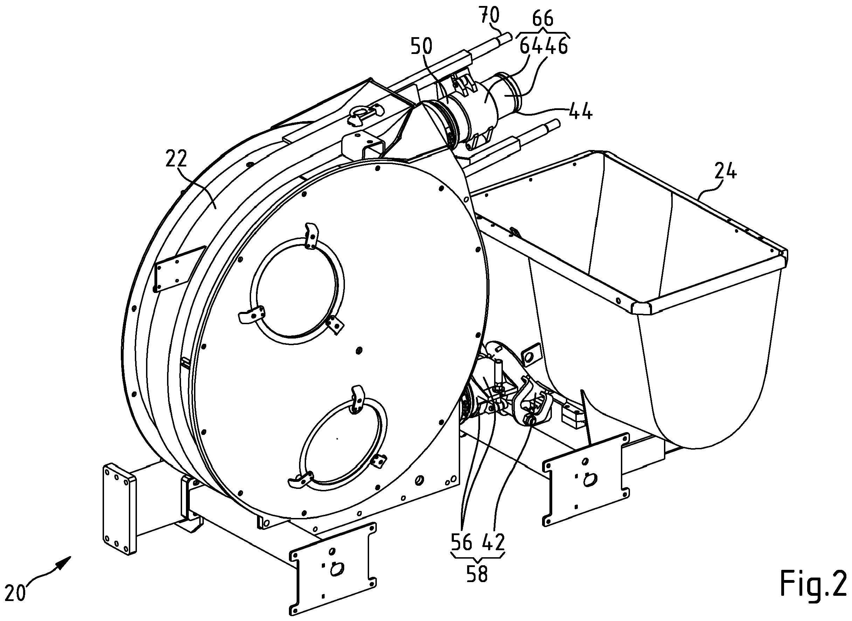

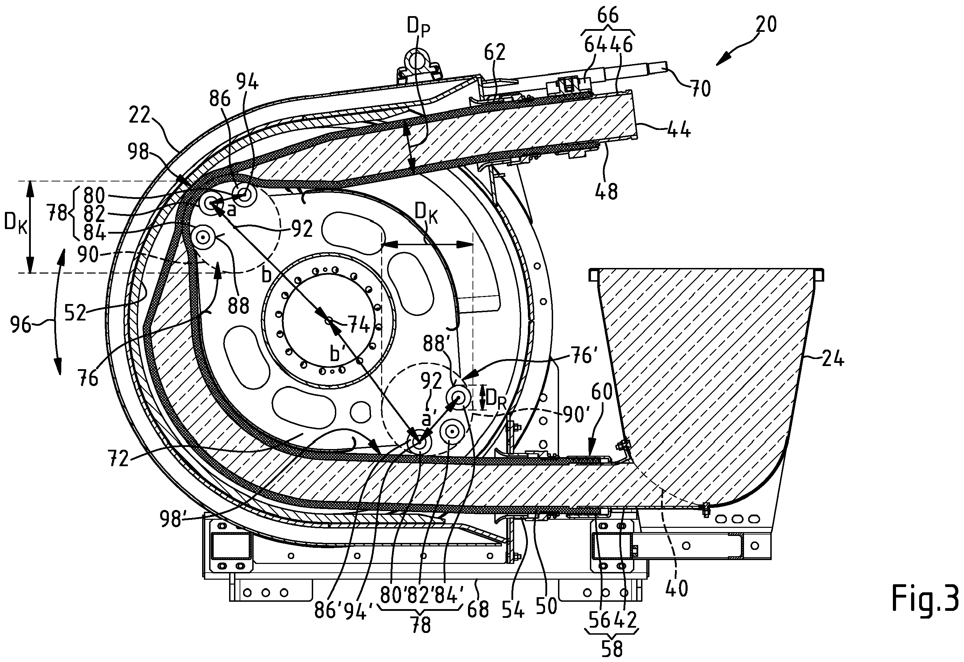

Wie aus der Fig. 2 und der Fig. 3 zu ersehen ist, hat die Rotorschlauchpumpe 20 einen ersten Anschluss 40 an einem Leitungsstück 42, das mit dem Materialaufgabebehälter 24 verbunden ist. Die Rotorschlauchpumpe 20 weist einen zweiten Anschluss 44 an einem Leitungsstück 46 mit einem Kupplungsteil 48 auf, das für den Anschluss einer Druckförderleitung dient. Die Rotorschlauchpumpe 20 hat einen Pumpschlauch 50, der in einem in dem Pumpengehäuse 22 ausgebildeten Schlauchbett 52 angeordnet ist.

In dem Pumpengehäuse 22 gibt es eine erste Schlauchführung 54, durch die der Pumpschlauch 50 zu dem Leitungsstück 42 geführt ist. An dem Leitungsstück 42 ist der Pumpschlauch 50 mit einem Klemmorgan 56 befestigt. Das Leitungsstück 42 mit dem Klemmorgan 56 ist eine erste Halteeinrichtung 58 für den Pumpschlauch 50. Mit der Halteeinrichtung 58 wird der Pumpschlauch 50 in einem Abschnitt 60 gehalten. Das Pumpengehäuse 22 weist eine zweite Schlauchführung 62 auf, durch die der Pumpschlauch 50 zu dem Leitungsstück 46 gelegt ist. An dem Leitungsstück 46 ist der Pumpschlauch 50 mit einem Klemmorgan 64 festgelegt. Für den Pumpschlauch 50 bilden das Leitungsstück 46 und das Klemmorgan 64 eine zweite Halteeinrichtung 66. Die Rotorschlauchpumpe 20 hat eine als Rahmensystem gestaltete Basis 68 mit einer das Pumpengehäuse 22 einschließenden Trägerkonstruktion 70.

Die Rotorschlauchpumpe 20 enthält einen drehbeweglichen Rotor 72, der mittels eines Hydromotors (nicht gezeigt) um eine Rotorachse 74 gedreht werden kann. An dem Rotor 72 sind eine erste Einrichtung 76 zum Quetschen des Pumpschlauchs 50 und eine von der ersten Einrichtung 76 zum Quetschen getrennte weitere Einrichtung 76' zum Quetschen des Pumpschlauchs 50 aufgenommen. Die Einrichtungen 76, 76' zum Quetschen des Pumpschlauchs 50 enthalten jeweils eine Rollengruppe 78, 78' mit mehreren Quetschrollen 80, 82, 84, 80', 82', 84'. Die Quetschrollen 80, 82, 84, 80', 82', 84' haben Rollenkörper 86, 86' mit Rollenumfangsflächen 88, 88' für das Quetschen des Pumpschlauchs 50, die in einer zu der Rotorachse 74 senkrechten Drehebene jeweils an einer gemeinsamen Kreislinie 90, 90' von innen her tangential anliegen. Das Kreislinienzentrum 92, 92' einer Kreislinie 90, 90' ist dabei von der Rotorachse 74 radial beabstandet. Der Durchmesser D_{K} der Kreislinien 90, 90' ist dabei größer als der Durchmesser D_{P} des Pumpschlauchs 50. Die Quetschrollen 80, 82, 84, 80', 82', 84' der Rollengruppen 78, 78' haben jeweils Drehachsen 94, 94', deren gegenseitiger Abstand a jeweils kleiner ist als der Abstand b der Drehachsen 94, 94' der Quetschrollen 80, 82, 84, 80', 82', 84' von der Rotorachse 74.

Wenn der Rotor 72 in der Richtung des Doppelpfeils 96 im Uhrzeigersinn umläuft, wird der Pumpschlauch 50 mittels der Quetschrollen 80, 82, 84, 80', 82', 84' der Rollengruppe 78, 78' einer Einrichtung 76, 76' zum Quetschen an einer gemeinsamen, der Rollengruppe 78, 78' jeweils zugeordneten Quetschstelle 98, 98' gemeinsam gequetscht und dabei gegen das Schlauchbett 52 der Rotorschlauchpumpe 20 zusammengedrückt. Dabei wird durch das Verlagern der Quetschstelle 98, 98' beim Drehen des Rotors 72 der Beton aus dem Materialaufgabebehälter 24 über den Anschluss 40 angesaugt und in der Drehrichtung durch den Pumpschlauch 50 hindurch zu dem Anschluss 44 in die Förderleitung 28 am Verteilermast 26 gedrückt.

Bei einem Rückwärtspumpen, z. B. zur Reinigung, wird der Rotor 72 in der Richtung des Doppelpfeils 96 gegen den Uhrzeigersinn rotiert. Dies hat zur Folge, dass der Beton durch den Pumpschlauch 50 aufgrund des Verlagerns der Quetschstelle 98, 98' in der Drehrichtung zum Materialaufgabebehälter 24 zurückgepumpt wird.

In der Rotorschlauchpumpe 20 werden die Kontaktflächen der Quetschrollen 80, 82, 84, 80', 82', 84' mit dem Pumpschlauch 50 an den Quetschstellen 98, 98' des Pumpschlauchs 50 anders als bei einer Rotorschlauchpumpe 20, in der eine Quetschstelle 98, 98' in einem Pumpschlauch 50 durch eine einzelne Quetschrolle bewirkt wird, verlagert und aufgeteilt. Auf diese Weise kann die Reibung zwischen den Quetschrollen 80, 82, 84, 80', 82', 84' und dem Pumpschlauch 50 in der Rotorschlauchpumpe 20 verringert werden, was zu einem höheren Wirkungsgrad der Rotorschlauchpumpe 20 führt und darüber hinaus auch die thermische Belastung des Pumpschlauchs 50 reduziert.

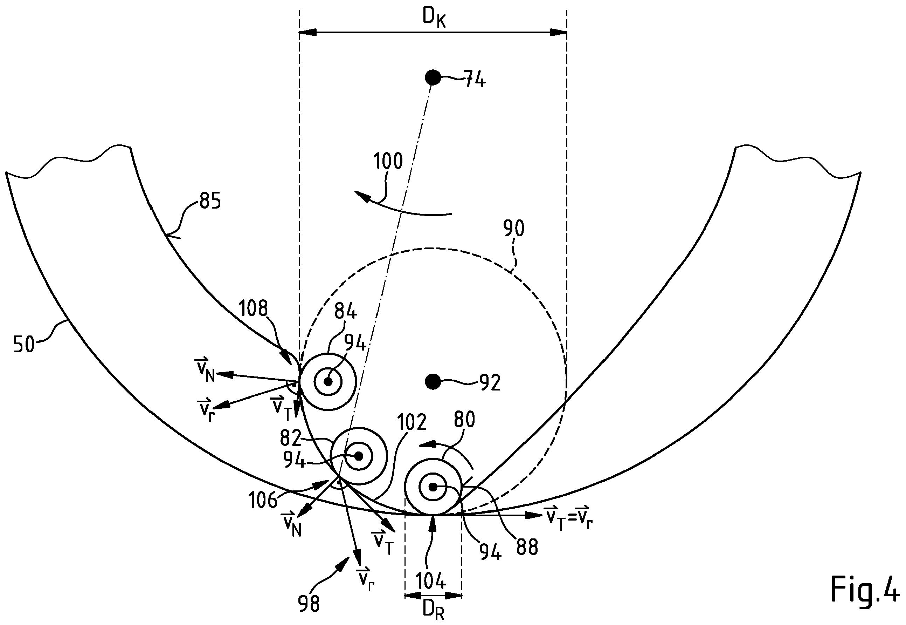

Die Fig. 4 erläutert die Relativbewegung der Quetschrollen 80, 82, 84 und dem Pumpschlauch 50 der Einrichtung 76 zum Quetschen des Pumpschlauchs 50 in der Rotorschlauchpumpe 20.

Bei einem Drehen des Rotors 72 in der Richtung des Pfeils 100 wird der Pumpschlauch 50 mittels der Einrichtung 76 zum Quetschen mit einem bogenförmigen Quetschprofil 102 an der Quetschstelle 98 in eine im Wesentlichen konvexe Form gequetscht. Dabei ist die Drehgeschwindigkeit der Quetschrollen 80, 82, 84 um ihre eigene Drehachse 94 in den Abschnitten 104, 106, 108 des Pumpschlauchs 50 verschieden.

Die Rollengruppe 78 der Quetschrollen 80, 82, 84 in der Rotorschlauchgruppe 20 bewirkt in dem Pumpschlauch 50 das Ausbilden von einem Fördermediumkeil, der einem Fördermediumkeil beim Quetschen des Pumpschlauchs einer Rotorschlauchpumpe mit einer einzelnen Quetschrolle entspricht, die einen dem Durchmesser D_{K} der Kreislinie 90 entsprechenden Rollendurchmesser D_{R} hat.

In dem Abschnitt 104 gleicht die durch die Reibung zwischen dem Pumpschlauch 50 und der Rollenumfangsfläche 88 hervorgerufene Drehbewegung der Quetschrolle 80, 82, 84 um ihre eigene Drehachse 94 die an die Rollenumfangsfläche 88 tangentiale Komponente v̅_̅{̅T̅}̅ der Relativgeschwindigkeit v̅ᵣ̅=v̅_̅{̅T̅}̅ +v̅_̅{̅N̅}̅ von Quetschrolle 80, 82, 84 und Pumpschlauch 50 aufgrund der durch das Rotieren des Rotors 72 bewirkten Verlagerung der Quetschrolle 80 um die Rotorachse 74 vollständig aus, wobei v̅_̅{̅N̅}̅ die zu der Oberfläche 85 des Pumpschlauchs 50 senkrechte Komponente von Quetschrolle 80, 82, 84 und Pumpschlauch 50 ist. In dem Abschnitt 104 gibt es deshalb zwischen der Quetschrolle 80 und dem Pumpschlauch 50 keinen Schlupf, d. h. keine Differenz der zu der Rollenumfangsfläche 88 der Quetschrolle 80 tangentialen Komponente v̅_̅{̅T̅}̅ der Relativgeschwindigkeit von Quetschrolle 80 und Pumpschlauch 50 an der Rollenumfangsfläche 88.

Anders als eine Quetschrolle mit einem Rollendurchmesser, der dem Durchmesser D_{K} der Kreislinie 90 entspricht, gleicht die Drehbewegung der Quetschrolle 82 um ihre eigene Drehachse 94 jedoch auch in dem Abschnitt 106 die durch das Bewegen des Rotors 72 hervorgerufene tangentiale Komponente v̅_̅{̅T̅}̅ der Relativgeschwindigkeit v̅ᵣ̅ von Quetschrolle 82 und Pumpschlauch 50 aufgrund einer in Bezug auf die Quetschrolle 80 verringerten Drehgeschwindigkeit um ihre Drehachse 94 aus. Zwischen einer Quetschrolle 82 und dem Pumpschlauch 50 gibt es deshalb in dem Abschnitt 106 ebenfalls keinen Schlupf.

In dem Abschnitt 108 kommt die Drehbewegung der Quetschrolle 84 um ihre eigene Drehachse 94 nahezu zum Erliegen. Die durch ein Rotieren des Rotors 72 hervorgerufene Verlagerung der Quetschrolle 84 um die Rotorachse 74 hat hier eine zu der Rollenumfangsfläche 88 der Quetschrolle 84 tangentiale Geschwindigkeitskomponente v̅_̅{̅T̅}̅, deren Betrag klein ist und die aufgrund der Drehbewegung der Quetschrolle 84 um ihre eigene Drehachse 94 kompensiert wird. Auch in dem Abschnitt 108 ist deshalb ein Schlupf zwischen der Rollenumfangsfläche 88 der Quetschrolle 84 und dem Pumpschlauch 50 gering.

Zu bemerken ist, dass der unerwünschte Schlupf zwischen der Rollenumfangsfläche 88 der Quetschrollen 80, 82, 84 und dem Pumpschlauch 50 in dem theoretischen Grenzfall unendlich kleiner Rollendurchmesser D_{R} auf den Wert Null reduziert werden kann.

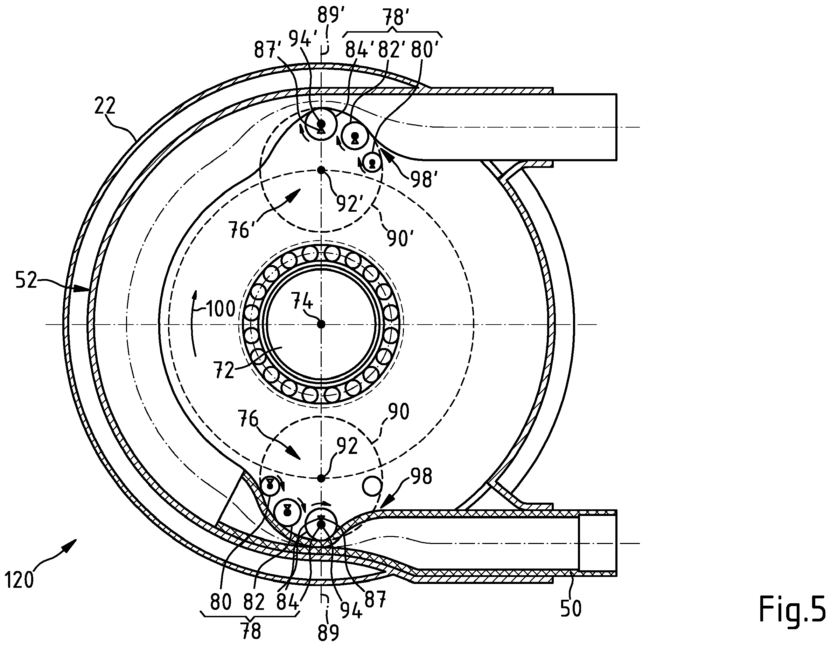

Die Fig. 5 ist ein Teilschnitt einer zweiten Rotorschlauchpumpe 120. Soweit die Baugruppen und Elemente der Rotorschlauchpumpe 120 den Baugruppen und Elementen der anhand der Fig. 1 bis Fig. 4 beschriebenen Rotorschlauchpumpe 20 entsprechen, sind diese durch die gleichen Zahlen als Bezugszeichen kenntlich gemacht.

Die Rotorschlauchpumpe 120 hat eine erste Einrichtung 76 zum Quetschen des Pumpschlauchs 50 und eine zweite Einrichtung 76' zum Quetschen des Pumpschlauchs 50 mit einer Rollengruppe 78, 78', die jeweils drei Quetschrollen 80, 82, 84, 80', 82', 84' enthalten, die unterschiedliche Rollendurchmesser D_{R84} ≥ D_{R82} > D_{R80} und D_{R84'} ≥ D_{R82'} > D_{R80'} haben. Die Quetschrollen 80, 82, 84, 80', 82', 84' sind an dem Rotor 72 der Rotorschlauchpumpe 120 an unterschiedlichen Lagerstellen 87, 87' um die Drehachsen 94, 94' drehbar gelagert.

Die Quetschrollen 80, 82, 84, 80', 82', 84' einer Rollengruppe 78, 78' sind in der Rotorschlauchpumpe 120 jeweils so angeordnet, dass bei einem Bewegen des Rotors 72 im Uhrzeigersinn in der mittels des Pfeils 100 kenntlich gemachten Förderrichtung, die Quetschrolle 80, 80' mit dem kleinsten Rollendurchmesser D_{R80}, D_{R80'} den übrigen Quetschrollen 82, 82' und 84, 84' vorauseilt d. h. vor der Quetschrolle 82, 82' mit dem mittleren Rollendurchmesser D_{R82}, D_{R82'} mit dem Pumpschlauch 50 in Eingriff gerät. Die Quetschrolle 82, 82' mit dem mittleren Rollendurchmesser D_{R82}, D_{R82'} einer Rollengruppe 78, 78' gerät wiederum vor der Quetschrolle 84, 84' mit dem größten Rollendurchmesser D_{R84} bzw. D_{R84'} mit dem Pumpschlauch 50 in Eingriff. Die Rollenumfangsflächen der Quetschrollen 80, 82, 84, 80', 82', 84' berühren dabei jeweils eine Kreislinie 90 bzw. 90' um das Kreislinienzentrum 92, 92' auf der zu dem Kreislinienzentrum 92, 92' weisenden Seite tangential.

Dabei liegt die Lagerstelle 87, 87' der Quetschrolle 84, 84' mit dem jeweils größten Rollendurchmesser D_{R84}, D_{R84'} auf einer Geraden 89, 89', welche die Rotorachse 74 senkrecht schneidet und durch das Kreislinienzentrum 92 bzw. 92' verläuft.

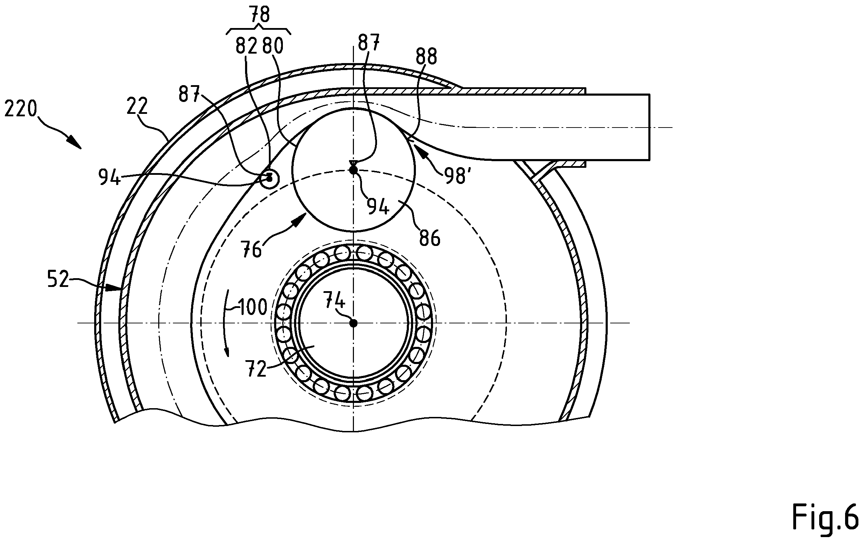

Die Fig. 6 ist ein Teilschnitt einer dritten Rotorschlauchpumpe 220. Soweit die Baugruppen und Elemente der Rotorschlauchpumpe 220 den Baugruppen und Elementen der anhand der Fig. 1 bis Fig. 4 beschriebenen Rotorschlauchpumpe 20 entsprechen, sind diese durch die gleichen Zahlen als Bezugszeichen kenntlich gemacht.

Die Rotorschlauchpumpe 220 hat eine Einrichtung 76 zum Quetschen des Pumpschlauchs 50 mit einer Rollengruppe 78, die zwei an dem Rotor 72 an den Lagerstellen 87 drehbeweglich gelagerte Quetschrollen 80, 82 enthält. Die Rollengruppe 78 hat eine als eine Vorlaufrolle wirkende Quetschrolle 82, deren Rollendurchmesser D_{R} kleiner ist als der Rollendurchmesser D_{R} der Quetschrolle 80, die in der Rollengruppe 78 als eine Hauptquetschrolle fungiert. Mittels der Quetschrollen 80, 82 der Rollengruppe 78 wird der Pumpschlauch 50 in der Rotorschlauchpumpe 220 in mehreren Stufen gequetscht.

Die Rollenumfangsflächen 88 der Rollenkörper 86 der Quetschrollen 80, 82 der Rollengruppe 78 liegen dabei anders als in der vorstehend anhand der Fig. 5 beschriebenen Rotorschlauchpumpe 120 nicht in einer zu der Rotorachse 74 senkrechten Drehebene an einer gemeinsamen Kreislinie von innen her tangential an.

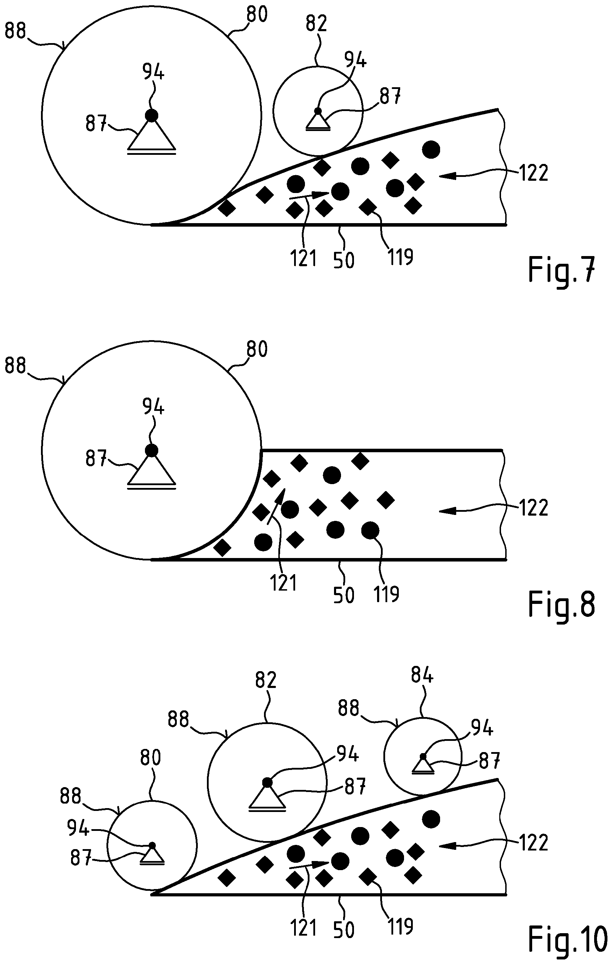

Die Fig. 7 erläutert das stufenförmige Quetschen des Pumpschlauchs 50 mittels der Quetschrollen 80, 82 der ersten Rollengruppe 78 in der dritten Rotorschlauchpumpe 220. Mittels der als Vorlaufrolle wirkenden Quetschrolle 82 wird der Pumpschlauch 50 beim Pumpen von Fördermedium in der Rotorschlauchpumpe 220 vorgeformt, bevor er mit der als Hauptquetschrolle wirkenden Quetschrolle 80 beaufschlagt wird. Das Fördermedium 119 in dem Pumpschlauch 50 bildet dabei einen Fördermediumkeil 122 mit einem näherungsweis dreieckförmigen Querschnitt. Hierdurch wird das Fördermedium 119 in dem Pumpschlauch 50 in einer der Drehrichtung des Rotors 72 der Rotorschlauchpumpe entsprechenden Förderrichtung 121 bewegt, die an den mit einer Quetschrolle 80, 82 in Eingriff stehenden Abschnitten der Wände des Pumpschlauchs 50 im Wesentlichen parallel ist.

Gegenüber dem in der Fig. 8 gezeigten Quetschen eines Pumpschlauchs 50 mit einer einzelnen Quetschrolle 80 wird auf diese Weise sowohl die Belastung der in der Anordnung der Fig. 7 als Hauptquetschrolle wirkenden Quetschrolle 80 als auch die Belastung des Pumpschlauchs 50 insgesamt gesenkt. Darüber hinaus werden so die durch Schlupf verursachten Reibungskräfte zwischen den Quetschrollen 80, 82 und dem Pumpschlauch 50 verringert. Das liegt insbesondere daran, dass bei einem Quetschen des Pumpschlauchs 50 mit mehreren Quetschrollen 80, 82, wie es die Fig. 7 zeigt, die Kontaktflächen des Pumpschlauchs 50 mit den Rollenumfangsflächen 88 kleiner sind als bei einem Quetschen eines Pumpschlauchs 50 mit einer einzelnen Quetschrolle 80.

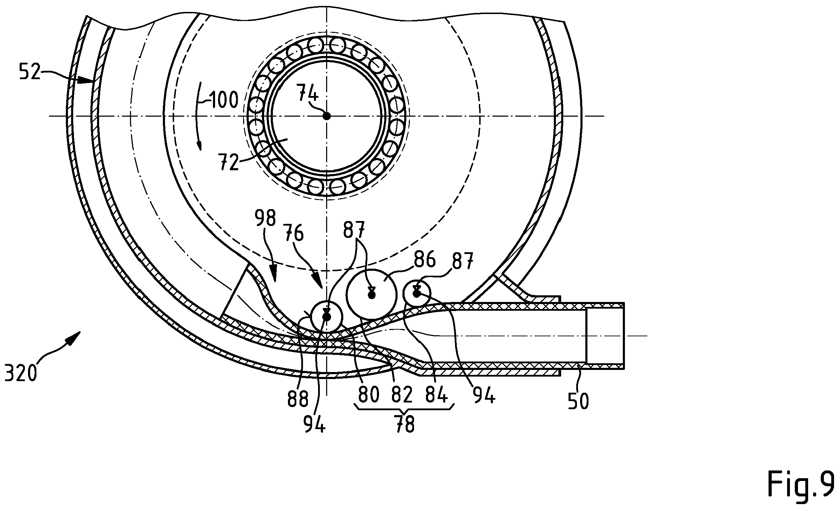

Die Fig. 9 ist ein Teilschnitt einer vierten Rotorschlauchpumpe 320. Soweit die Baugruppen und Elemente der Rotorschlauchpumpe 320 den Baugruppen und Elementen der anhand der Fig. 1 bis Fig. 4 beschriebenen Rotorschlauchpumpe 20 entsprechen, sind diese durch die gleichen Zahlen als Bezugszeichen kenntlich gemacht.

In der Rotorschlauchpumpe 320 gibt es eine Einrichtung 76 zum Quetschen des Pumpschlauchs 50 mit einer Rollengruppe 78, die drei an einer Lagerstelle 87 drehbeweglich gelagerte Quetschrollen 80, 82, 84 aufweist. Die Quetschrollen 80, 82, 84 der Rollengruppe 78 haben hier nicht nur voneinander verschiedene Rollendurchmesser. Die Rollenumfangsflächen 88 der Rollenkörper 86 der Quetschrollen 80, 82, 84 der Rollengruppe 78 liegen auch hier anders als in der vorstehend anhand der Fig. 6 beschriebenen Rotorschlauchpumpe 220 nicht in einer zu der Rotorachse 74 senkrechten Drehebene an einer gemeinsamen Kreislinie von innen her tangential an.

In der Rollengruppe 78 wirkt die Quetschrolle 84 als eine Vorlaufrolle, deren Rollendurchmesser kleiner ist als der Rollendurchmesser der Quetschrolle 82, die in der Rollengruppe 78 als eine Hauptquetschrolle fungiert. Die Anordnung der Quetschrollen 80, 82, 84 an dem Rotor 72 der Rotorschlauchpumpe 320 ermöglicht bei einer Drehbewegung des Rotors in der Richtung des Pfeils 100 ebenfalls ein stufenförmiges Quetschen des Pumpschlauchs 50.

Die Fig. 10 erläutert das Quetschen des Pumpschlauchs 50 mittels der Quetschrollen 80, 82, 84 der zweiten Quetschrollengruppe 78 der Rotorschlauchpumpe 320. Mittels der als Vorlaufrolle wirkenden Quetschrolle 84 wird der Pumpschlauch 50 beim Pumpen von Fördermedium 119 in der Rotorschlauchpumpe 320 hier ebenfalls vorgeformt, bevor er mit der als Hauptquetschrolle wirkenden Quetschrolle 82 beaufschlagt wird. Hierdurch wird das Fördermedium 119 in dem Pumpschlauch 50 ebenfalls in einer Förderrichtung 121 bewegt, die an den mit einer Quetschrolle 80, 82 in Eingriff stehenden Abschnitten der Wände des Pumpschlauchs 50 im Wesentlichen parallel ist. Im Vergleich zu dem in der Fig. 8 gezeigten Quetschen eines Pumpschlauchs 50 senkt dies sowohl die Belastung der als Hauptquetschrolle wirkenden Quetschrolle 82 als auch die Belastung des Pumpschlauchs 50 insgesamt. Auch hier sind die durch Schlupf verursachten Reibungskräfte zwischen den Quetschrollen 80, 82, 84 und dem Pumpschlauch 50 vergleichsweise gering, weil die Kontaktflächen des Pumpschlauchs 50 mit den Rollenumfangsflächen 88 der Quetschrollen 80, 82, 84 hier kleiner sind als bei einem Quetschen des Pumpschlauchs 50 mit einer einzelnen Quetschrolle 80 (siehe Fig. 8).

Zu bemerken ist, dass eine Rollengruppe von Quetschrollen in einer Rotorschlauchpumpe, die eine Hauptquetschrolle und zu beiden Seiten der Hauptquetschrollen angeordnete Vorlaufrollen aufweist, das Pumpen von Fördermedium mit der Rotorschlauchpumpe in zwei zueinander entgegengesetzten Drehrichtungen ermöglicht.

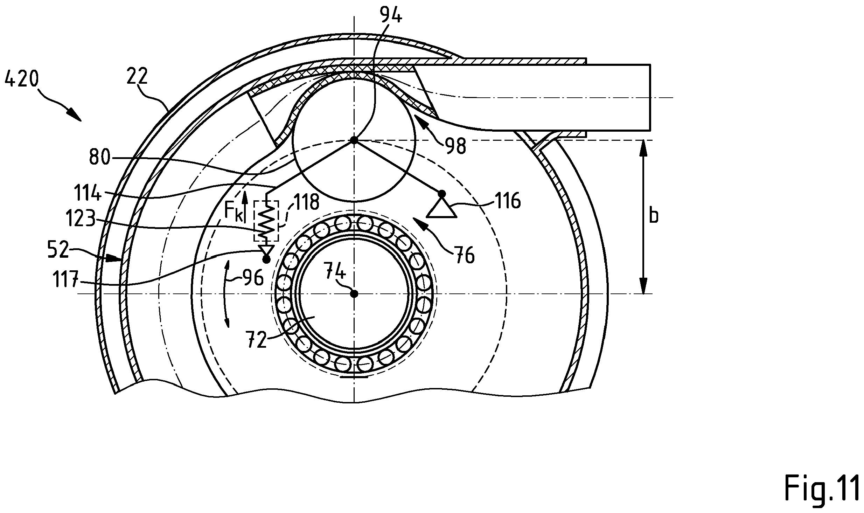

Die Fig. 11 ist ein Teilschnitt einer fünften Rotorschlauchpumpe 420. Soweit die Baugruppen und Elemente der Rotorschlauchpumpe 20 den Baugruppen und Elementen der anhand der Fig. 1 bis Fig. 4 beschriebenen Rotorschlauchpumpe 20 entsprechen, sind diese durch die gleichen Zahlen als Bezugszeichen kenntlich gemacht.

Der Rotor 72 der Rotorschlauchpumpe 420 trägt eine Einrichtung 76 zum Quetschen des Pumpschlauchs 50 mit einem Rollenträger 114, der an dem Rotor 72 beweglich verlagerbar angeordneten ist. Der Rollenträger 114 ist an dem Rotor 72 zwangsgeführt. Er ist dem Rotor 114 in einem ersten Schwenklager 116 schwenkbeweglich gehalten und mit einem Krafterzeugungsmittel 118 in einem zweiten Schwenklager 117 abgestützt. Das Krafterzeugungsmittel 118 enthält einen elastisch verformbaren Energiespeicher 123 in Form einer Schraubenfeder. An dem Rollenträger 114 ist eine Quetschrolle 80 für das Quetschen des Pumpschlauchs 50 drehbeweglich gelagert. Das Krafterzeugungsmittel 118 beaufschlagt den Rollenträger 114 mit einer Kraft F_{K}, die bei einer Drehbewegung des Rotors 72 in der Richtung des Doppelpfeils 96 im Uhrzeigersinn oder gegen den Uhrzeigersinn die an dem Rollenträger 114 drehbar gelagerte Quetschrolle 80 gegen den Pumpschlauch 50 drückt.

Das bewegliche Anordnen des Rollenträgers 114 in der Einrichtung 76 zum Quetschen des Pumpschlauchs 50 ermöglicht, dass die Quetschrolle 80 festen Bestandteilen wie z. B. Steinen in einem Fördermedium 119 ausweichen kann und der Pumpbetrieb dennoch unter Beaufschlagen des Pumpschlauchs 50 mit großen Quetschkräften erfolgen kann. Der Rollenträger 114 ist in der Rotorschlauchpumpe 420 jeweils unter Veränderung des Abstands b der Quetschrolle 80 von der Rotorachse 74 verlagerbar.

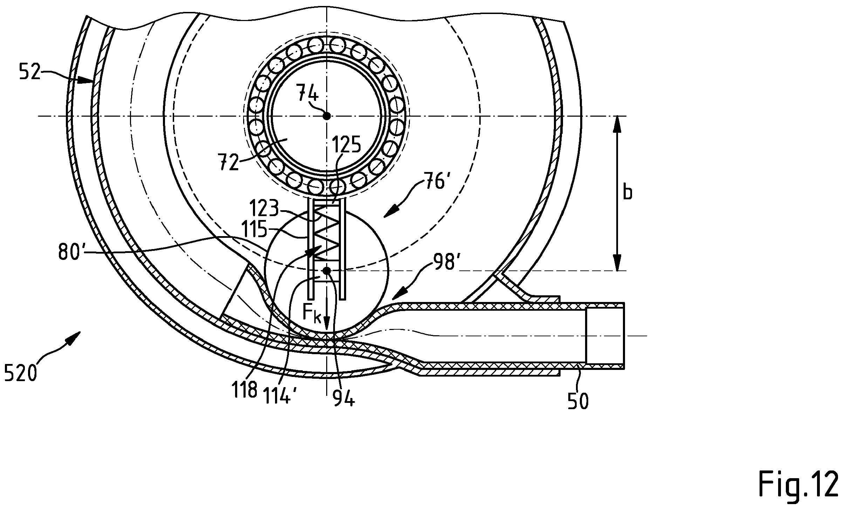

Die Fig. 12 ist ein Teilschnitt einer sechsten Rotorschlauchpumpe 520. Soweit die Baugruppen und Elemente der Rotorschlauchpumpe 20 den Baugruppen und Elementen der anhand der Fig. 1 bis Fig. 4 beschriebenen Rotorschlauchpumpe 20 entsprechen, sind diese durch die gleichen Zahlen als Bezugszeichen kenntlich gemacht.

Die Rotorschlauchpumpe 520 weist außerdem eine Einrichtung 76 zum Quetschen des Pumpschlauchs 50 auf, die einen Rollenträger 114 mit einer Quetschrolle 80' auf, die an dem Rollenträger drehbeweglich gelagert ist. Der Rollenträger 114 ist an dem Rotor 72 in einer Linearführung 115 gehalten und mit einem Krafterzeugungsmittel 118 an dem Rotor 72 in einem Widerlager 125 abgestützt. Das Krafterzeugungsmittel 118 enthält hier einen als eine Tellerfeder ausgebildeten elastischen Energiespeicher 123. Das Krafterzeugungsmittel 118 beaufschlagt hier den Rollenträger 114 mit einer Kraft F_{K}, die bei einer Drehbewegung des Rotors 72 die an dem Rollenträger 114 drehbar gelagerte Quetschrolle 80 bei einer Drehbewegung des Rotors 72 im oder gegen den Uhrzeigersinn ebenfalls gegen den Pumpschlauch 50 drückt.

Das bewegliche Anordnen des Rollenträgers 114 in der Einrichtung 76 zum Quetschen des Pumpschlauchs 50 ermöglicht ebenfalls, dass die Quetschrolle 80 festen Bestandteilen wie z. B. Steinen in einem Fördermedium 119 ausweichen kann und der Pumpbetrieb dennoch unter Beaufschlagen des Pumpschlauchs 50 mit großen Quetschkräften erfolgt. Der Rollenträger 114 ist in der Rotorschlauchpumpe 520 jeweils unter Veränderung des Abstands b der Quetschrolle 80 von der Rotorachse 74 verlagerbar.

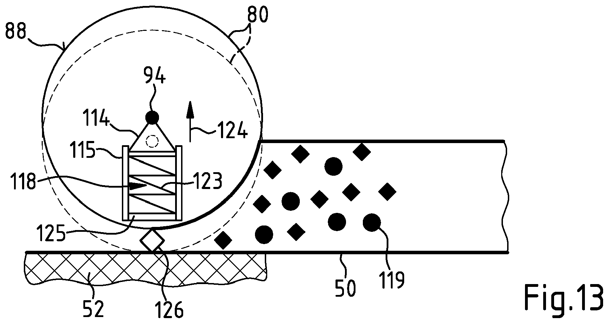

Die Fig. 13 zeigt den Pumpschlauch 50 mit der Quetschrolle 80 der Rotorschlauchpumpe 520. Das bewegliche Anordnen des Rollenträgers 114 in der Einrichtung 76 zum Quetschen des Pumpschlauchs 50 ermöglicht hier, dass die Quetschrolle 80 einem Stein 126 in dem Fördermedium 119 in der mit dem Pfeil 124 kenntlich gemachten Richtung ausweichen kann. In ähnlicher Weise ermöglicht die Anordnung der Quetschrolle 80 in der Rotorschlauchpumpe 420 ein Ausweichen der Quetschrolle 80 in der zu der Rotorachse 74 weisenden Richtung, wenn das Fördermedium 119 Bestandteile enthält, die in der Quetschstelle des Pumpschlauchs 50 nicht in die Förderrichtung ausweichen.

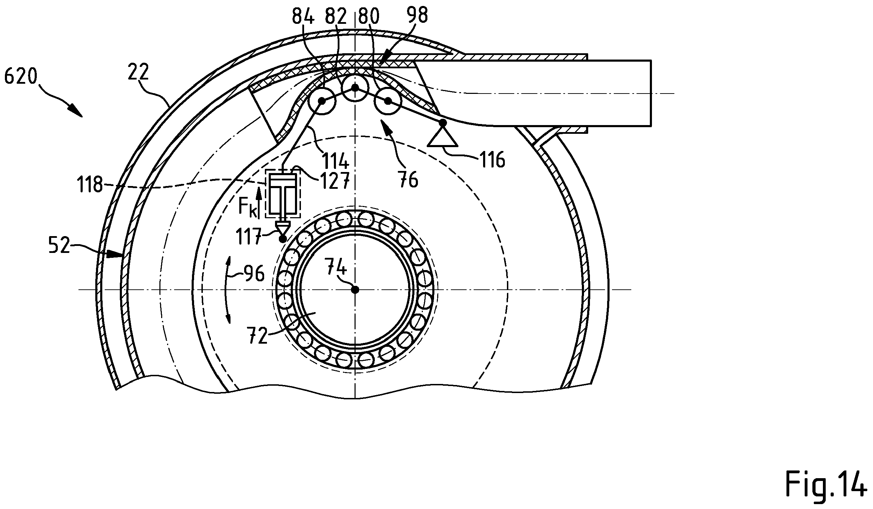

Die Fig. 14 ist ein Teilschnitt einer siebten Rotorschlauchpumpe 620. Soweit die Baugruppen und Elemente der Rotorschlauchpumpe 20 den Baugruppen und Elementen der anhand der Fig. 1 bis Fig. 4 beschriebenen Rotorschlauchpumpe 20 entsprechen, sind diese durch die gleichen Zahlen als Bezugszeichen kenntlich gemacht.

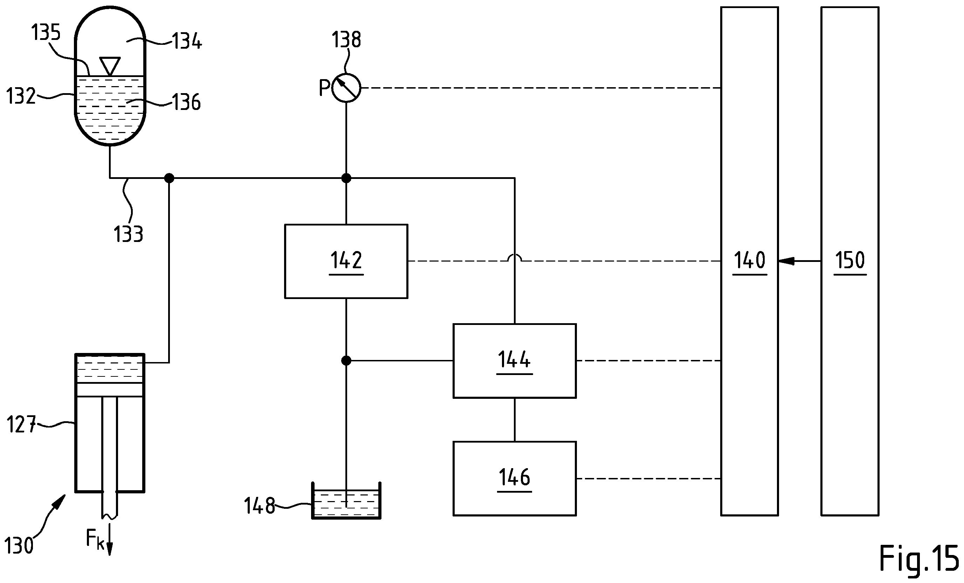

Der Rotor 72 der Rotorschlauchpumpe 620 trägt eine Einrichtung 76 zum Quetschen des Pumpschlauchs 50 mit einem Rollenträger 114, der an dem Rotor 72 beweglich verlagerbar angeordneten ist. Der Rollenträger 114 ist hier ebenfalls an dem Rotor 72 in einem Schwenklager 116 schwenkbeweglich gehalten und mit einem Krafterzeugungsmittel 118 mit einer Kraft F_{K} beaufschlagt, das als elastischen Energiespeicher ein in der Fig. 15 gezeigtes hydropneumatisches Federsystem 130 mit einem Hydrozylinder 127 enthält. Der Hydrozylinder 127 des hydropneumatischen Federsystems ist mit dem Rollenträger 114 bewegungsgekoppelt und an dem Rotor 72 in einem Schwenklager 117 abgestützt. An dem Rollenträger 114 sind für das Quetschen des Pumpschlauchs 50 mehrere Quetschrollen 80, 82, 84 drehbeweglich gelagert.

Das in der Fig. 15 gezeigte hydropneumatische Federsystem 130 hat einen Hydraulikspeicher 132, der ein Stickstoffvolumen 134 und ein Ölvolumen 136 mit Hydrauliköl enthält. In dem Hydraulikspeicher 132 gibt es eine elastisch verformbare Membran 135, die in dem Hydraulikspeicher 132 das Ölvolumen 136 von dem Stickstoffvolumen 134 trennt. Der Hydraulikspeicher 132 kommuniziert durch eine Hydraulikleitung 133 mit dem Hydrozylinder 127. Durch Einstellen der Menge des Hydrauliköls in dem Hydraulikspeicher 132 kann der Gasdruck des Stickstoffvolumens variiert und damit für den Hydrozylinder 127 eine Federkonstante in Form einer Kraft-Weg-Beziehung eingestellt werden.

In dem hydropneumatischen Federsystem 130 gibt es einen Drucksensor 138, der mit einer Steuereinheit 140 verbunden ist. Der Drucksensor 138 dient für das Erfassen des Hydraulikdrucks p des Hydrauliköls in dem Hydraulikspeicher 132. Mit der Steuereinheit 140 kann ein Ablassventil 142, ein Nachfüllventil 144 und eine Hydraulikpumpe 146 abhängig von dem Signal des Drucksensors 138 angesteuert werden. Indem das Ablassventil 142 geöffnet wird, ist es möglich, aus der Hydraulikleitung 133 Hydrauliköl in einen Hydrauliktank 148 abzuführen. Über das Nachfüllventil 144 kann die Hydraulikleitung 133 mit Hydrauliköl aus dem Hydrauliktank 148 beaufschlagt werden, das von der Hydraulikpumpe 146 zugeführt wird.

Der Steuereinheit 140 des hydropneumatischen Federsystems 130 ist eine Eingabeeinheit 150 zugeordnet, an der eine Bedienperson für das Hydrauliköl in dem Hydrozylinder 127 einen definierten Druck p auswählen und damit die Kraft F_{K} bestimmen kann, die den Rollenträger 114 in der Rotorschlauchpumpe 520 beaufschlagt. Das hydropneumatische Federsystem kann in einer Betriebsart für Druckregelung und einer Betriebsart für Volumenstromregelung betrieben werden. Für die Druckregelung bildet die Steuereinheit 140 mit dem Drucksensor 138 einen Regelkreis, der den Hydraulikdruck in der Hydraulikleitung 133 auf einen Sollwert regelt. Alternativ hierzu oder zusätzlich kann die Steuereinheit 140 derart ausgeführt sein, dass diese entsprechend einer Differenz Δp des Ist-Drucks p_{H-Ist} zu einem Soll-Druck p_{H-Soll} in der Hydraulikleitung 133 über das Nachfüllventil 144 in die Hydraulikleitung 133 eine bestimmte Volumenmenge Hydrauliköl zuführt. Dabei wird die Größe eines hierfür erforderlichen Volumenstroms nach physikalischen Gesetzten in der Steuereinheit 140 berechnet. Bei einem jeden Umlauf der Rotorschlauchpumpe 520 wird diese Berechnung des Volumenstroms durchgeführt, sodass sich der Ist-Druck p_{H-Ist} in der Hydraulikleitung 133 einem gewünschten Soll-Druck p_{H-Soll} nähert. Zu bemerken ist, dass es in einer weiteren, modifizierten Ausführungsform grundsätzlich auch möglich ist, das hydropneumatische Federsystem 130 in der Rotorschlauchpumpe 520 so zu betreiben, dass für das Zuführen von Hydrauliköl in die Hydraulikleitung 133 das hydropneumatische Federsystem 130 in der Betriebsart für Druckregelung betrieben wird und für das Abführen von Hydrauliköl aus der Hydraulikleitung 133 in der Betriebsart für Volumenstromregelung.

Die Kennlinie der von der Auslenkung des x des Kolbens in dem Hydrozylinder 127 abhängigen Kraft F_{K}, die der Hydrozylinder 127 des hydropneumatischen Federsystems 130 für das Einleiten in eine Quetschrolle 80, 82, 84 bereitstellt, kann in der Rotorschlauchpumpe 520 grundsätzlich sowohl mittels Druckregelung als auch mittels Volumenstromsteuerung eingestellt werden. Damit lässt sich erreichen, dass die Anpresskraft der Quetschrollen 80, 82, 84 an den Pumpschlauch 50 in gewissen Grenzen variiert und an eine Konstitution des Fördermediums 119 angepasst werden kann.

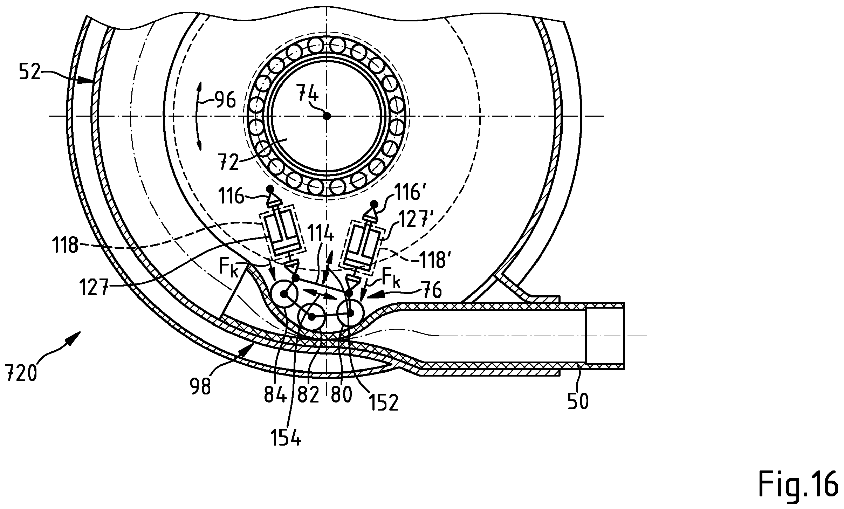

Die Fig. 16 ist ein Teilschnitt einer achten Rotorschlauchpumpe 720. Soweit die Baugruppen und Elemente der Rotorschlauchpumpe 20 den Baugruppen und Elementen der anhand der Fig. 1 bis Fig. 4 beschriebenen Rotorschlauchpumpe 20 entsprechen, sind diese durch die gleichen Zahlen als Bezugszeichen kenntlich gemacht.

Der Rotor 72 der Rotorschlauchpumpe 720 trägt eine Einrichtung 76 zum Quetschen des Pumpschlauchs 50 mit einem Rollenträger 114, der an dem Rotor 72 beweglich verlagerbar angeordneten ist. Der Rollenträger 114 kann an dem Rotor 72 mit zwei voneinander verschiedenen Bewegungsfreiheitsgraden in einer zu der Rotorachse 74 senkrechten Ebene verlagert werden. An dem Rotor 72 ist der Rollenträger 114 hier mit einem ersten Krafterzeugungsmittel 118 und einem zweiten Krafterzeugungsmittel 118' an einem ersten Schwenklager 116 und an einem weiteren Schwenklager 116' abgestützt. Die elastischen Energiespeicher der Krafterzeugungsmittel 118, 118' sind jeweils als ein hydropneumatisches Federsystem ausgeführt, das einen Hydrozylinder 127 enthält, wie es vorstehend anhand der Fig. 15 beschreiben ist.

Der Rollenträger 114 ist in der Rotorschlauchpumpe 720 jeweils unter Veränderung des Abstands der Quetschrollen 80, 82, 84 von der Rotorachse 74 verlagerbar. Das Krafterzeugungsmittel 118, 118' beaufschlagt hier den Rollenträger 114 dabei mit einer Kraft, die bei einer Drehbewegung des Rotors 72 die an dem Rollenträger 114 drehbar gelagerte Quetschrollen 80, 82, 84 gegen den Pumpschlauch 50 drücken. In der Rotorschlauchpumpe 720 kann der Rollenträger 114 an dem Rotor 72 relativ zu dem Pumpschlauch 50 in den mittels der Doppelpfeile 152, 154 kenntlich gemachten zueinander senkrechten Richtungen verlagert werden. Das bewegliche Anordnen des Rollenträgers 114, 114' in der Einrichtung 76 zum Quetschen des Pumpschlauchs 50 ermöglicht dabei wiederum, dass eine Quetschrolle 80, 82, 84 festen Bestandteilen wie z. B. Steinen in einem Fördermedium ausweichen kann und der Pumpbetrieb dennoch unter Beaufschlagen des Pumpschlauchs 50 mit großen Quetschkräften möglich ist.

Zu bemerken ist, dass eine modifizierte Ausführungsform der Rotorschlauchpumpen 20, 120, 220, 320, 420, 520, 620, 720 auch zwei oder mehr Einrichtungen 76 zum Quetschen des Pumpschlauchs 50 mit zueinander identisch oder auch unterschiedlich aufgebauten Quetschrollengruppen aufweisen kann. Darüber hinaus ist zu bemerken, dass der Einsatz von mehreren Quetschrollen 80, 82, 84 in einer Quetschrollengruppe eine Einstellung der Form eines Fördermediumkeils 122 in dem Pumpschlauch 50 in einer Weise ermöglicht, dass weniger Reibung entsteht und damit der Wirkungsgrad der Rotorschlauchpumpe verbessert wird.

Zusammenfassend sind folgende bevorzugten Merkmale festzuhalten: Eine Rotorschlauchpumpe 20, 120, 220, 320, 420, 520, 620, 720 enthält einen in einem Schlauchbett angeordneten Pumpschlauch 50. Der Pumpschlauch 50 kann für das Pumpen von Fördermedium von einem ersten Anschluss 40 zu einem zweiten Anschluss 44 mit wenigstens einer an einem um eine Rotorachse 74 drehbaren Rotor 72 aufgenommenen Einrichtung 76, 76' zum Quetschen des Pumpschlauchs 50 an einer bei Drehen des Rotors 72 an dem Pumpschlauch verlagerten Quetschstelle gegen das Schlauchbett 52 zusammengedrückt werden. Die wenigstens eine Einrichtung 76, 76' zum Quetschen des Pumpschlauchs 50 enthält eine Quetschrollengruppe 78, 78' mit mehreren Quetschrollen 80, 82, 84, 80', 82', 84', die den Pumpschlauch 50 an der wenigstens einen Quetschstelle gemeinsam quetschen. Alternativ oder zusätzlich kann die Einrichtung 76, 76' zum Quetschen des Pumpschlauchs 50 wenigstens einen an dem Rotor 72 beweglich verlagerbar angeordneten Rollenträger 114, 114' mit wenigstens einer an dem Rollenträger 114, 114' drehbar gelagerten Quetschrolle 80, 82, 84, 80', 82', 84' aufweisen.

Gemäß einem Aspekt der Erfindung können die Quetschrollen (80, 82, 84, 80', 82', 84') der Quetschrollengruppe (78, 78') zumindest teilweise einen unterschiedlichen Durchmesser haben.

Gemäß einem weiteren Aspekt der Erfindung können die Quetschrollen (80, 82, 84, 80', 82', 84') der Quetschrollengruppe (78, 78') Drehachsen (94, 94') haben, deren gegenseitiger Abstand a jeweils kleiner ist als der Abstand b der Drehachsen (94, 94') der Quetschrollen (80, 82, 84, 80', 82', 84') von der Rotorachse (74).

Gemäß einem weiteren Aspekt der Erfindung kann die Quetschrollengruppe (78, 78') wenigstens eine Quetschrolle (80, 82, 84, 80', 82', 84') aufweisen, deren Rollendurchmesser Dᵣ kleiner ist als der Durchmesser Dₚ des Pumpschlauchs (50).

Gemäß einem weiteren Aspekt der Erfindung kann die Quetschrollengruppe (78, 78') eine erste Quetschrolle (82) und wenigstens eine weitere der ersten Quetschrolle (82) benachbarte Quetschrolle (80) haben, wobei die erste Quetschrolle (82) der wenigstens einen weiteren Quetschrolle (80) an dem Pumpschlauch (50) bei Drehen des Rotors (72) vorauseilt, und wobei die erste Quetschrolle (82) einen kleineren Rollendurchmesser D_{R} hat als die wenigstens eine weitere Quetschrolle (80).

Gemäß einem weiteren Aspekt der Erfindung können die Quetschrollen (80, 82, 84, 80', 82', 84') der Quetschrollengruppe (78, 78') Rollenumfangsflächen (88, 88') für das Quetschen des Pumpschlauchs (50) haben, die an einer in einer zu der Rotorachse (74) senkrechten Drehebene liegenden Kreislinie (90, 90') auf der zu dem Kreislinienzentrum (92, 92') weisenden Seite tangential anliegen.

Gemäß einem weiteren Aspekt der Erfindung kann die Einrichtung zum Quetschen des Pumpschlauchs (50) einen an dem Rotor (72) beweglich verlagerbar angeordneten Rollenträger (114, 114') enthalten, an dem wenigstens eine der Quetschrollen (80, 82, 84) drehbar gelagert ist.

Die Erfindung betrifft auch eine Rotorschlauchpumpe mit einem in einem Schlauchbett (52) angeordneten Pumpschlauch (50), der für das Pumpen von Fördermedium von einem ersten Anschluss (40) zu einem zweiten Anschluss (44) mit wenigstens einer an einem um eine Rotorachse (74) drehbaren Rotor (72) aufgenommenen Einrichtung (76) zum Quetschen des Pumpschlauchs (50) an einer bei Drehen des Rotors (72) an dem Pumpschlauch (50) verlagerten Quetschstelle (98, 98') gegen das Schlauchbett (52) zusammengedrückt werden kann, wobei die Einrichtung (76) zum Quetschen des Pumpschlauchs (50) wenigstens einen an dem Rotor (72) beweglich verlagerbar angeordneten Rollenträger (114) mit wenigstens einer an dem Rollenträger (114) beweglich gelagerten Quetschrolle (80, 82, 84) enthält.

Gemäß einem Aspekt der Erfindung ist dabei der Rollenträger (114) unter Veränderung des Abstands b der wenigstens einen Quetschrolle (80, 82, 84) von der Rotorachse (74) verlagerbar.

Gemäß einem Aspekt der Erfindung ist dabei der Rollenträger (114) an dem Rotor (72) zwangsgeführt und/oder der Rollenträger (114) mit wenigstens zwei voneinander verschiedenen Bewegungsfreiheitsgraden (x, y) an dem Rotor (72) verlagerbar.

Gemäß einem Aspekt der Erfindung enthält die Rotorschlauchpumpe ein an dem Rotor (72) abgestütztes Krafterzeugungsmittel (118, 118') für das Beaufschlagen des Rollenträgers (114) mit einer Kraft F_{K}, die bei einer Drehbewegung des Rotors (72) die wenigstens eine an dem Rollenträger (114) drehbar gelagerte Quetschrolle (80, 82, 84) gegen den Pumpschlauch (50) drückt.

Gemäß einem Aspekt der Erfindung ist dabei die Kraft F_{K}, die bei einer Drehbewegung des Rotors (72) die wenigstens eine Quetschrolle (80, 82, 84) gegen den Pumpschlauch (50) drückt, einstellbar.

Gemäß einem Aspekt der Erfindung enthält das Krafterzeugungsmittel (118, 118') einen durch Verlagern des Rollenträgers (114) an dem Rotor (72) elastisch verformbaren Energiespeicher (123).

Gemäß einem Aspekt der Erfindung umfasst das Krafterzeugungsmittel (118, 118') ein hydropneumatisches Federsystem (130) mit einem mit dem Rollenträger (114) bewegungsgekoppelten und an dem Rotor (72) abgestützten Hydrozylinder (127).

Ein Fahrmischer kann eine vorstehend angegebene, für das Fördern von Dickstoffen, insbesondere für das Fördern von Beton ausgebildeten Rotorschlauchpumpe enthalten, die entsprechend einem oder mehreren der vorstehend angegebenen Aspekte ausgebildet ist.

### Bezugszeichenliste:

- 10: Fahrgestell
- 12: Mischtrommel
- 14: Achse
- 16: Beschickungs- und Auslassöffnung
- 18, 18': Hinterachse
- 20, 120, 220, 320, 420, 520, 620, 720: Rotorschlauchpumpe
- 22: Pumpengehäuse
- 24: Materialaufgabebehälter
- 26: Verteilermast
- 28: Förderleitung
- 30, 30': Vorderachse
- 32: Führerhaus
- 34: Lagerbock
- 36: vertikale Achse
- 38, 38', 38": Auslegerarm
- 40, 44: Anschluss
- 42, 46: Leitungsstück
- 48: Kupplungsteil
- 50: Pumpschlauch
- 52: Schlauchbett
- 54, 62: Schlauchführung
- 56: Klemmorgan
- 58, 66: Halteeinrichtung
- 60: Abschnitt des Pumpschlauchs
- 64: Klemmorgan
- 68: Basis
- 70: Trägerkonstruktion
- 72: Rotor
- 74: Rotorachse
- 76, 76': Einrichtung zum Quetschen
- 78, 78': Quetschrollengruppe
- 80, 80', 82, 82', 84, 84': Quetschrollen
- 85: Oberfläche
- 86, 86': Rollenkörper
- 87, 87': Lagerstelle
- 88, 88': Rollenumfangsfläche
- 89, 89': Gerade
- 90, 90': Kreislinie
- 92, 92': Kreislinienzentrum
- 94, 94': Drehachse
- 96: Doppelpfeil
- 98, 98': Quetschstelle
- 100: Pfeil
- 102: Quetschprofil
- 104, 106, 108: Abschnitt
- 114, 114': Rollenträger
- 115: Linearführung
- 116, 116', 117: Schwenklager
- 118, 118': Krafterzeugungsmittel
- 119: Fördermedium
- 121: Förderrichtung
- 122: Fördermediumkeil
- 123: Energiespeicher
- 124: Pfeil
- 125: Widerlager
- 126: Stein
- 127: Hydrozylinder
- 130: Hydropneumatisches Federsystem
- 132: Hydraulikspeicher
- 133: Hydraulikleitung
- 134: Stickstoffvolumen
- 135: Membran
- 136: Ölvolumen
- 138: Drucksensor
- 140: Steuereinheit
- 142: Ablassventil
- 144: Nachfüllventil
- 146: Hydraulikpumpe
- 148: Hydrauliktank
- 150: Eingabeeinheit
- 152, 154: Doppelpfeil

## Patentansprüche

1. Rotorschlauchpumpe mit einem in einem Schlauchbett (52) angeordneten Pumpschlauch (50), der für das Pumpen von Fördermedium von einem ersten Anschluss (40) zu einem zweiten Anschluss (44) mit wenigstens einer an einem um eine Rotorachse (74) drehbaren Rotor (72) aufgenommenen Einrichtung (76) zum Quetschen des Pumpschlauchs (50) an einer bei Drehen des Rotors (72) an dem Pumpschlauch (50) verlagerten Quetschstelle (98, 98') gegen das Schlauchbett (52) zusammengedrückt werden kann,
**dadurch gekennzeichnet, dass**
die Einrichtung (76) zum Quetschen des Pumpschlauchs (50) wenigstens einen an dem Rotor (72) beweglich verlagerbar angeordneten Rollenträger (114) mit wenigstens einer an dem Rollenträger (114) beweglich gelagerten Quetschrolle (80, 82, 84) enthält, wobei
ein an dem Rotor (72) abgestütztes Krafterzeugungsmittel (118, 118') für das Beaufschlagen des Rollenträgers (114) mit einer Kraft FK, die bei einer Drehbewegung des Rotors (72) die wenigstens eine an dem Rollenträger (114) drehbar gelagerte Quetschrolle (80, 82, 84) gegen den Pumpschlauch (50) drückt.

2. Rotorschlauchpumpe nach Anspruch 1, **dadurch gekennzeichnet, dass** der Rollenträger (114) unter Veränderung des Abstands b der wenigstens einen Quetschrolle (80, 82, 84) von der Rotorachse (74) verlagerbar ist.

3. Rotorschlauchpumpe nach Anspruch 2, **dadurch gekennzeichnet, dass** der Rollenträger (114) an dem Rotor (72) zwangsgeführt ist und/oder dass der Rollenträger (114) mit wenigstens zwei voneinander verschiedenen Bewegungsfreiheitsgraden (x, y) an dem Rotor (72) verlagerbar ist.

4. Rotorschlauchpumpe nach einem der Ansprüche 1 bis 3, **dadurch gekennzeichnet, dass** die Kraft F_{K}, die bei einer Drehbewegung des Rotors (72) die wenigstens eine Quetschrolle (80, 82, 84) gegen den Pumpschlauch (50) drückt, einstellbar ist.

5. Rotorschlauchpumpe nach einem der Ansprüche 1 bis 4, **dadurch gekennzeichnet, dass** das Krafterzeugungsmittel (118, 118') einen durch Verlagern des Rollenträgers (114) an dem Rotor (72) elastisch verformbaren Energiespeicher (123) enthält.

6. Rotorschlauchpumpe nach einem der Ansprüche 1 bis 5, **dadurch gekennzeichnet, dass** das Krafterzeugungsmittel (118, 118') ein hydropneumatisches Federsystem (130) mit einem mit dem Rollenträger (114) bewegungsgekoppelten und an dem Rotor (72) abgestützten Hydrozylinder (127) umfasst.

7. Rotorschlauchpumpe nach einem der Ansprüche 1 bis 6, **dadurch gekennzeichnet, dass** die wenigstens eine Einrichtung (76, 76') zum Quetschen des Pumpschlauchs (50) eine Quetschrollengruppe (78, 78') mit mehreren Quetschrollen (80, 82, 84, 80', 82', 84') enthält, die den Pumpschlauch (50) an der wenigstens Quetschstelle (98, 98') gemeinsam quetschen.

8. Rotorschlauchpumpe nach einem der Ansprüche 1 bis 7, **dadurch gekennzeichnet, dass** die Quetschrollen (80, 82, 84, 80', 82', 84') der Quetschrollengruppe (78, 78') zumindest teilweise einen unterschiedlichen Durchmesser haben.

9. Rotorschlauchpumpe nach einem der Ansprüche 1 bis 8, **dadurch gekennzeichnet, dass** die Quetschrollen (80, 82, 84, 80', 82', 84') der Quetschrollengruppe (78, 78') Drehachsen (94, 94') haben, deren gegenseitiger Abstand a jeweils kleiner ist als der Abstand b der Drehachsen (94, 94') der Quetschrollen (80, 82, 84, 80', 82', 84') von der Rotorachse (74).

10. Rotorschlauchpumpe nach einem der Ansprüche 1 bis 9, **dadurch gekennzeichnet, dass** die Quetschrollengruppe (78, 78') wenigstens eine Quetschrolle (80, 82, 84, 80', 82', 84') aufweist, deren Rollendurchmesser Dᵣ kleiner ist als der Durchmesser Dₚ des Pumpschlauchs (50).

11. Rotorschlauchpumpe nach einem der Ansprüche 1 bis 10, **dadurch gekennzeichnet, dass** die Quetschrollengruppe (78, 78') eine erste Quetschrolle (82) und wenigstens eine weitere der ersten Quetschrolle (82) benachbarte Quetschrolle (80) hat, wobei die erste Quetschrolle (82) der wenigstens einen weiteren Quetschrolle (80) an dem Pumpschlauch (50) bei Drehen des Rotors (72) vorauseilt, und wobei die erste Quetschrolle (82) einen kleineren Rollendurchmesser D_{R} hat als die wenigstens eine weitere Quetschrolle (80).

12. Rotorschlauchpumpe nach einem der Ansprüche 1 bis 11, **dadurch gekennzeichnet, dass** die Quetschrollen (80, 82, 84, 80', 82', 84') der Quetschrollengruppe (78, 78') Rollenumfangsflächen (88, 88') für das Quetschen des Pumpschlauchs (50) haben, die an einer in einer zu der Rotorachse (74) senkrechten Drehebene liegenden Kreislinie (90, 90') auf der zu dem Kreislinienzentrum (92, 92') weisenden Seite tangential anliegen.

13. Fahrmischer mit einer für das Fördern von Dickstoffen, insbesondere für das Fördern von Beton ausgebildeten Rotorschlauchpumpe (20, 120, 220, 320, 420) nach einem der Ansprüche 1 bis 12.
